# EUROPEAN PATENT SPECIFICATION

(11) **EP 2 253 995 B1**
(45) Date of publication and mention of the grant of the patent: **09.05.2012**
(21) Application number: 10162793.3
(22) Date of filing: 13.05.2010
(51) Int. Cl.: G02F 1/35, G02F 1/017, G02F 1/13

(54) **Method for reduction of recovery time of SESAM absorbers**
Verfahren zur Verringerung der Wiederherstellungszeit von SESAM-Absorbern
Procédé de réduction du temps de reprise des absorbeurs SESAM

(30) Priority: 18.05.2009 PL 38805609
(43) Date of publication of application: 24.11.2010
(73) Proprietor: Instytut Technologii Elektronowej, 02-668 Warszawa (PL)
(72) Inventor: Jasik, Agata Wladyslawa, 02-495 Warszawa (PL); Hejduk, Krzysztof, 02-815 Warszawa (PL); Muszalski, Jan Maksymilian, 04-937 Warszawa (PL)
(74) Representative: Lewicka, Katarzyna Dorota

(56) References cited:
- WO-A1-2008/012437
- US-A1- 2008 100 908
- JASIK A ET AL: "The reduced temporal parameters of passivated semiconductor saturable absorber mirror" THIN SOLID FILMS, ELSEVIER-SEQUOIA S.A. LAUSANNE, CH LNKD- DOI:10.1016/J.TSF.2009.06.059, vol. 518, no. 1, 2 November 2009 (2009-11-02), pages 171-173, XP026666677 ISSN: 0040-6090 [retrieved on 2009-07-09]
- RUTZ A ET AL: "Passively modelocked GaInNAs VECSEL at centre wavelength around 1.3 [mu]m" ELECTRONICS LETTERS, IEE STEVENAGE, GB LNKD- DOI:10.1049/EL:20061793, vol. 42, no. 16, 3 August 2006 (2006-08-03), pages 926-927, XP006027155 ISSN: 0013-5194

## Description

The present invention relates to a method for reduction of a recovery time of SESAM absorbers, especially near-surface absorbers, manufactured from semiconductor heterostructure and used for generation of ultra-short pulses by passively modelocked lasers.

Until now the passive modelocking has been demonstrated in many solid-state lasers: Ti:sapphire, Nd:YAG, Yb:YAG, Nd:YLF, Cr:LiSAF, etc (M.T.Asaki, C.P.Huang, D.Garvey, J.Zhou, H.C.Kapteyn, M.M.Murnane, Opt. Lett., vol.18 (1993) 977). The mentioned lasers are characterised by large gain and absorption bandwidths that can be easily pumped by semiconductor diodes. Up to the present, the shortest pulses have been achieved by means of so-called Kerr lens using nonlinear changes of a refractive index in an active element and leading to a temporary self-focusing of a laser beam. This effect is, however, quite weak and very sensitive to a geometric configuration of the beam in a cavity resonator. Moreover, a system with the Kerr lens does not in general show a tendency to a self-starting generation of ultra-short pulses. Because of this, more attractive mechanisms seem to be the mode-locking techniques generally based on a saturable absorption. Three mechanisms of the passive mode-locking are well-known. The first of them is based on a combination of the slow saturable absorber mode-locking with a dynamic gain saturation, the second - on the fast saturable absorber mode-locking, and the third - on a soliton mode-locking in which the slow absorber with a relaxation time many times longer than ultra-short pulse stabilizes the soliton and starts pulses formation. In the soliton mode-locking regime, the light pulse is dominated by the balance of group delay dispersion GVD and self-phase modulation SPM. In this case, a dynamic response of the absorber is limited to a stabilisation of the soliton and starts a light pulse formation process. The soliton mode-locking mechanism is particularly useful in case of the diode-pumped solid-state lasers. Due to a lack of a coupling between the modes and dynamics of the laser we gain an additional degree of freedom in design of the laser cavity and a modulating element.

The most interesting method of known mode-locking techniques is the one proposed in the nineties of the last century and based on the use of semiconductor saturable absorbers, located inside the laser resonator (U.Keller, D.A.B.Miller, G.D.Boyd, T.H.Chiu, J.F.Fergusson, M.T.Asom, Opt. Lett., viol.17 (1992) 505). Modem epitaxial technologies (MBE-Molecular Beam Epitaxy, MOVPE - Metalorganic Vapor Phase Epitaxy) allow to produce multilayer semiconductor structures of saturable absorbers with a precise control of the parameters, i.e., the absorption wavelength, saturation energy and the recovery time. Using semiconductor saturable absorbers SESAM (Semiconductor Saturable Absorber Mirror), all regimes of mode-locking have been demonstrated: pure Q-switching, Q-switched mode-locking and pure CW-mode-locking (Continuous Wave). The first produced SESAM modulator was formed as the saturable absorber located in the high finesse Fabry-Perot cavity (Antiresonant Fabry-Perot Saturable Absorber) and composed of distributed Bragg reflectors (DBRs), absorber and spacer layers with a thickness adjusted such that the Fabry-Perot cavity operated at antiresonance. An operation at antiresonance conditions results in a device that is broad-band and has a minimal group velocity dispersion GVD. It results directly from a spectral dependence of DBR reflectivity. The subsequent modifications of the modulator design were consisted in replacing a top mirror with an anti-reflective layer AR (antireflective) or in no additional top coating resulting in a top reflector formed by Fresnel reflection at semiconductor/air interface. Particularly perspective version of the modulator is a semiconductor structure of Bragg reflector with the high reflectivity completed by a single quantum well acting as the absorber. The stable generation of short pulses, which is possible by using such a modulator, results from the ultra-fast changes of the structure reflectivity, which changes are conditioned by the saturation of a resonant excitonic absorption in a quantum well. Contrary to the additive phase modulators, in this case, a pulse formation doesn't require the strict control over the cavity length and the principle of the modulator operation is substantially simplified. Moreover, the technological tolerance of structure manufacturing is greater and the implementation of the compact, monolithic structure is simpler. The structure of saturable Bragg mirror consists of the reflector with the quantum well immersed in its last layer and ensuring the appropriate absorption wavelength. The modulator located in the resonant cavity of the solid-state laser forces a femtosecond-pulse generation. Thus, locating the saturable Bragg reflector in the resonant cavity of the solid-state laser, two pulse regimes can occur. For the wavelengths longer than the exciton resonance wavelength in the cavity, the mode-locking leads to the generation of piko-second pulses. For wavelengths near or shorter than the resonance wavelength, femtosecond pulse generation can occur. The Bragg reflector structure without the quantum well and located in the laser cavity doesn't trigger the pulse generation. It means that the mode-locking and the resulting generation of ultra-fast pulses are conditioned by the saturable resonant absorption in the quantum well.

Because the absorber design and alloy parameters of the quantum well (QW) decide on the resonant saturable absorption in QW, the reduction of temporal characteristics of the absorber can be obtained either by using the free surface of the structure acting as a source of non-radiative recombination centers, or by creating an absorbing layer of a material with high density of trapping centers.

It is known that defects localized on the GaAs layer surface, being the last layer of the absorber, are related to surface states, which are located in the middle of a semiconductor energy gap. The GaAs layer surface is characterized by the high density of midgap states on the order of 1x10¹¹ - 1x10¹³cm⁻²eV⁻¹ (J. Dreybrodt, F. Daiminger, J. P. Reithmaier, A. Forchel, Phys. Rev. 51 (7) (1995) 4657). The origin of the surface states is not clearly defined. W.E. Spiecer at el. proposed a theory, in which the antisites of As and Ga located near the surface are considered as the defects responsible for the surface states (W. E. Spiecer, Z. Liliental-Weber, N. Newman, T. Kendelewicz, R. Cao, C. McCants, P. Mahowald, K. Miyano, I. Lindan, J. Vac. Sci. Technol. B (6) (1988) 1245). The surface states become a significant recombination channel of carriers excited in InGaAs quantum well if it is placed not deeper than 10 nm beneath the free surface of structure (V. Emiliani, B. Bonanni, A. Frova, M. Capizzi, F. Martelli, S.-S. Stone, J. Appl. Phys. 77(11) (1995) 5712). This effect is applied to the SESAM designing when the absorbing layer being also the quantum well is located with the depth from 2 nm to 5 nm beneath the bare surface (P. Klopp, V. Petrov, U. Griebner, G. Erbert, Optics Express 10 (2) (2002) 108). In such designs, the carriers generated in the well tunnels through the barrier and they can recombine at the surface states, which shortens their lifetime, and consequently, the recovery time of the absorber. However, the structures of this type are usually optimized not only in terms of pulse duration but also for obtaining the highest optical output power of the system. Such an optimization is possible only for the absorber structure with the resonant cavity.

In general, the total thickness of the absorber is designed in such a way that the quantum well is located at the antinode of the standing wave of electromagnetic field thereby maximizing its impact of the electron states in the potential well and leads to the strong absorption of the laser radiation. However, in this type of the structure with the resonant cavity, group delay dispersion GDD strongly depends on the wavelength of the incident light, which affects the spectral extension of generated pulses.

The first method for reduction of a recovery time of the absorber consists in the deposition of layer on the structure surface, which makes the cavity antiresonant, while the group delay dispersion becomes wavelength independent over the wide spectral range. The weak penetration of the electromagnetic field wave, responsible for the antiresonant structure, now is enhanced by the anti-reflective (AR) layer. This layer should be transparent to the designed wavelength and should not introduce strain to the modulator structure. The anti-reflective layer is the most often produced from silicon nitride (SiNₓ) because of its moisture-resistant behavior. There are reports of use silicon dioxide (SiO₂) as an anti-reflection layer, although it is less moisture-resistant. These anti-reflective layers simultaneously play a role of passivation layers and they are deposited on the structure surface generally by plasma-enhanced chemical vapor deposition method PECVD (Z. Chen, S. Pang, K. Yasutake, A. Rohatgi, J. Appl. Phys. 74 (4) (1993) 2856).

The second known method to reduce a recovery time of SESAM absorber relates to the crystallization conditions of the absorbing layers. The absorbing layers are produced by molecular beam epitaxy (MBE) at reduced growth temperature and atmosphere enriched in the element of group V of the Mendeleyev's periodic table. The temperatures from 250°C to 350°C (M. Haiml, U. Siegner, F. Morier-Genoud, U. Keller, M. Luysberg, R. C. Lutz, P. Specht and E. R. Weber, Appl. Phys. Lett., 74 (1999) 3134) are the most often used range with a V/III ratio about 20 (A. Krotkus, S. Marcinkevi 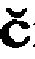 us, C. Jagadish and M. Kaminska, J. Luminescence 66&67 (1996) 455). These growth conditions favor the formation of antisite defects - the atom of group V is replaced by another atom in the material lattice. However, only electrically active defects As⁺ Ga are involved in the carriers recombination process while they constitute only 10% of all formed defects (X. Liu, A. Prasad, W. M. Chen, A. Kurpiewski, A. Stoschek, Z. Liliental-Weber and E. R. Weber, Appl. Phys. Lett., 65 (1994) 3002). It is possible to increase the density of the electrically active defects by applying appropriate heating. The greater density of As⁺_{Ga} defects, the shorter relaxation carrier time is obtained.

Both described methods influence a shortening of the carrier relaxation time and thereby a reduction of the recovery time of the structure. However, both methods have some disadvantages.

For the first method, the location of the active area near the free surface threatens the parameter instability of the device and its gradual degradation due to an oxidation (Z. Chen, S. Pang, K. Yasutake, A. Rohatgi, J. Appl. Phys. 74 (4) (1993) 2856).

For the second method, the absorption of radiation occurs at a neutral As^{o}_{Ga} defects present in the layer even after its annealing and results in lower power output of the system. In addition, the growth of the layers at the reduced temperature causes the material degradation due to a slow migration of the particles on the surface of a growing crystal, and thus the crystal lattice disorder. The annealing of the structure can partially reconstruct the crystal lattice but can also lead to interdiffusion between individual layers in the structure, the interface broadening and the absorbing layer relaxation. Therefore, the absorbing layer should have such a defect density that would provide a fast relaxation and at the same time would not generate losses in the structure.

To compensate the carrier lifetime extended due to the lower density of the trap centers, the additional non-radiative recombination channel should be activated or an existing one should be strengthen.

Depending on the deposition method, the type of the passivating material and the material of the passivated surface, the passivation proceeds with a different efficiency, and companies which manufacture semiconductor devices spend billions of dollars on it to get the most effective method of the passivation. One of the most important issue is the passivation of the laser mirrors, obtained on GaAs substrate and oriented in the crystallographic direction (100). The mirrors are degraded due to an overheating caused by the absorption of the optical radiation by the surface states. The lower density of the surface states on the mirror surface, the smaller charge density cumulated on it and the probability to melt the material is smaller, which means the total and an irreversible degradation of the device. In the case of SESAM absorbers with the active layer located near the surface, the structure should be characterized by the high density of surface states. Disadvantages of the devices such as the lasers and silicon solar cells are advantages in the case of the absorbers. The highest density of the surface states has been observed on the semiconductor surface covered by several nanometers of amorphous oxides, which arise in the process of the surface oxidation in air. However, in the case of the SESAM absorbers with an optical resonant cavity, a cap layer is necessary to minimize the dependence of the group delay dispersion on the wavelength of the incident beam. Therefore, the very important issue is the choice of the material for the cap layer, which should passivate the structure surface as inefficiently as possible and on the other hand it has to play a role of an antireflective layer (transparent for the radiation to which the absorber is designed).

A method for the reduction of a recovery time according to the invention relates to passive SESAM absorbers produced from semiconductor structure made of GaAs and related materials, whose an active area was placed in the interaction range of surface states. In this method, the appropriate dielectric antireflective layer is deposited on the free surface of the resonant absorber structure, in which a thickness of an optical resonant cavity is an even multiple of an optical path length of a wave. This layer consists of at least one dielectric: SiO₂, SiNₓ, TiOₓ, HfOₓ, which makes that a density of the surface states at an interface of GaAs semiconductor and the dielectric layer is in the range of 1x10¹²-1x10¹³cm⁻²eV⁻¹. The thickness of the deposited layer is equal to a quarter optical wavelength (¼ λ) in this layer and the deposition process is carried out at temperature lower than 350°C.

The method can be accomplished by the deposition of silicon dioxide (SiO₂) on the absorber surface. The deposition is run by the method of a plasma enhanced chemical vapor deposition (PECVD), keeping 1 Torr pressure in the reactor during the process and 1125 cm³/min and 750 cm³/min of reaction gas flows, respectively, for 2% silan (SiH₄) diluted in nitride (N₂) and for suboxide (N₂O). The generator power should be equal to 16 W under pulse operation regime at frequency 13,56 MHz.

The method can also be accomplished by the deposition of silicon nitride (SiNₓ) on the absorber surface. Then, the deposition is run by PECVD method, under 1 Torr pressure in the reactor during the process and keeping 1000 cm³/min and 20 cm³/min of reaction gas flow, respectively, for 2% silan (SiH₄) in nitride (N₂) and for ammonia (NH₃). The generator power should be equal to 15 W under pulse operation regime at frequency 13,56 MHz and 20W at 100kHz.

The method can also be accomplished by the deposition - first - the silicon dioxide (SiO₂) layer, then - the silicon nitride (SiNₓ) layer on the absorber surface or alternate deposition of thin layers of silicon nitride (SiNₓ), introducing compressive and tensile strains, on the absorber surface. A total thickness of these layers should equal to ¼λ in these materials.

The usage of the anti-reflective (AR) layer of a low surface passivation effectivity described in the method according to the invention causes that, on the absorber structure surface, there is possibly the highest concentration of non-radiative recombination centers, which results in the shorter recovery time of the modulator structure.

The invention will be explained more precisely with the help of Fig. 1, which schematically depicts a diagram of the SESAM structure after the growth process completed. Fig. 2 shows the standing wave intensity profile for λ=1.06 µm. Fig. 3 shows the group delay dispersion profile in the absorber without the absorbing layer, while Fig. 4 presents the group delay dispersion profile for the SESAM structure with the anti-resonant cavity. Fig. 5 shows dynamic characteristics of transmission change for the SESAM structures with different anti-reflective layers. Fig. 6 shows autocorrelation and optical spectrum of an active medium (Yb:KYW), where mode-locking has been obtained.

In this example of method, the modulator is of the surface type, which means that the active layer is placed in the range of interaction of surface states. For A^{III}B^{V} materials, it means that the active layer, i.e. the absorption layer, is placed not deeper than 10 nm under the free SESAM surface. Certainly, to enable the anti-reflective (AR) layer to play such a role specific conditions have to be fulfilled.

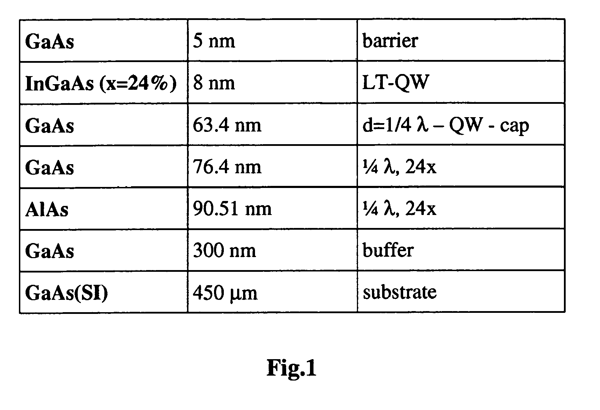

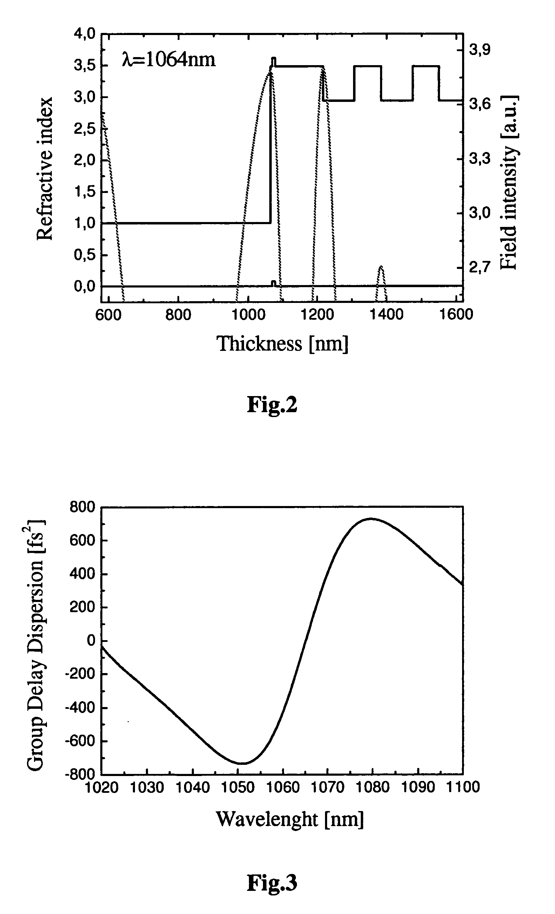

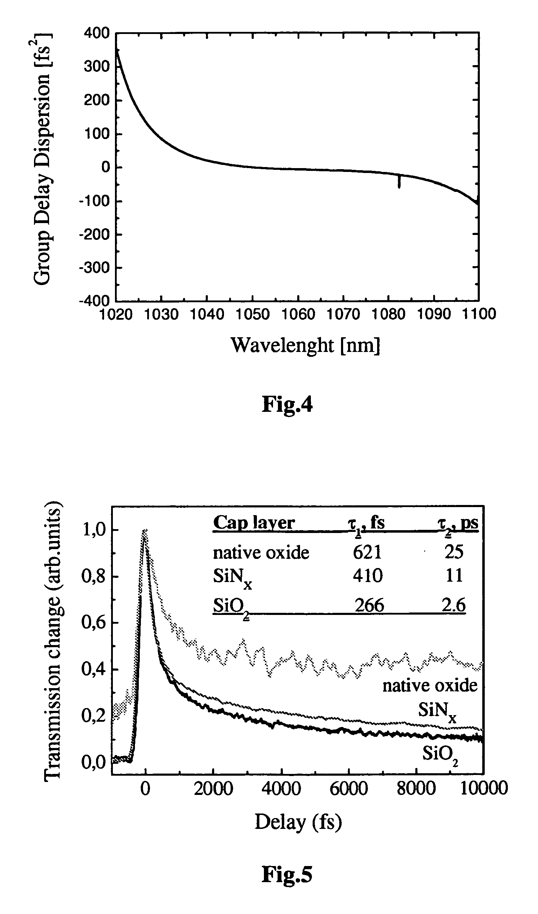

The absorber structure with the optical resonant cavity is the substrate for the layer (Fig. 1). The absorber consists of GaAs(SI) substrate, GaAs buffer, GaAs/AlAs Bragg mirror, In_{0.24}GaAs absorbing layer and GaAs barrier. The amplitude distribution of standing wave of λ=1.06 µm inside the SESAM modulator comprising a single GaAs/InGaAs/GaAs quantum well and AlAs/GaAs Bragg reflector together with a structure refractive index profile (the magnified active layer of the absorber) is shown in Fig. 2. However, in this type of the structure with the resonant cavity, for which one finds strong absorption of radiation, the dispersion of group delay strongly depends on the wavelength of the incident beam. In Fig. 3, the group delay dispersion profile for the SESAM structure with the resonant cavity and without the antireflective layer is shown. The delay of subsequent modes resulting from their different velocities may increase the pulse length and the recovery time of the modulator. The deposition of the anti-reflective layer changes the cavity into the anti-resonant one (Fig. 4) and hence one finds constant dispersion of group delay in wide spectral range. This effect is crucial for dynamic properties of the modulators. The modulator is anti-resonant if the thickness of the resonant cavity equals to the even multiple of a quarter of the wavelength optical path for which the modulator is designed or if the thickness of the dielectric layer equals to a quarter of the optical path of the wave inside this dielectric. It is important to ensure the optical transparency of the dielectric material for the designed wavelength - for the near infrared range from 800nm to 1060nm. In addition, the dielectric of the anti-reflective layer should increase the penetration of the incident electromagnetic wave.

Also, the dielectric material must not cause the stress relaxation in the modulator absorbing layer.

Thus, the dielectric of the anti-reflective layer should be deposited in the technological process allowing a full mechanical stress control and, for minimization of a thermal stress and for keeping the structure stability of SESAM, the process temperature should not exceed 350°C. For initial purification of a wafer (desorption of a water vapor) and for ensuring the chemical composition homogeneity of the layer during the whole deposition process, the process should be run in a vacuum chamber. Such requirements are fulfilled by plasma enhanced chemical vapor deposition method. The silicon dioxide SiO₂ and silicon nitride SiNx layers obtainable by this method are non-stechiometric and, depending on the process parameters, may contain from several to several tens percents of hydrogen. The possibility of manipulation of the process parameters allows to control the layer composition (thus the refractive index profile in optical applications) and strain.

In case of SiO₂, the precise control of the growth process allows to obtain the amorphous layer introducing compressive strains into the absorber layer, that is the strain opposite to the strain which is introduced by the absorbing layer to regions adjacent to it. Due to that, the strain in the system of the layers is compensated and hence the wavelength, for which the mode-locking occurs, is spectrally shifted.

In case of the deposition of SiNx, the process parameters are more crucial than for SiO₂, because strains appearing in the structure may be compressive as well as tensile ones and the refractive index may be found in the range 1.8 - 3.2 (for 632 nm wavelength). The deposition of the highly tensile strained layer of silicon nitride on the absorbing layer may cause the plastic relaxation of the absorber.

In order to obtain the silicon nitride layer with little compressive strain, the PECVD process is performed by alternate deposition of the compressive and tensile strain layers, which causes the partial stress compensation.

In order to obtain the layers of both silicon nitride and silicon dioxide with the preassumed strain and the refractive indices, the control of the PECVD process parameters is obligatory, especially: flows of the reactive gases and their ratio, powers and frequencies of the generators, their operation modes (pulse, continuous) and the determination of the deposition layer time as well as the process temperature (the substrate electrode temperature) and the pressure in the chamber during the growth process.

The dielectric material should passivate the free SESAM surface as weakly as possible. It is important, because, as it was mentioned before, the weaker passivation is, the higher surface density of the broken inter-atom bonds is, which increases the surface state density. This makes the recovery of the device faster.

When the dielectric layer is deposited, the surface state density should be in the range of 1x10¹²-1x10¹³cm⁻²eV⁻¹, i.e. should be comparable with the one of the semiconductor surface covered by an amorphous oxide.

The example method of the reduction of the recovery time was applied to the AlAs/GaAs/In_{0.24}GaAs SESAM structure, fabricated on the epi-ready GaAs (100) substrate by molecular beam epitaxy (MBE). When the substrate is put in RIBER 32P machine it is preliminarily purified by annealing in the buffer chamber at 350°C for 15 min. The annealing removes the water vapour from the surface. After the substrate was moved to the growth chamber, the second stage of the thermal treatment of the surface was performed - removing of the oxides and uncovering of the atomic steps of the GaAs substrate. The temperature was increased to 620°C for 15 min, then lowered to 530°C which is the growth temperature of the GaAs buffer layer. The buffer was grown with V/III ratio of 5.0. The crystallisation time was 20 min, which gave the thickness of 330 nm. The *in situ* reflection high-energy electron diffraction (RHEED) monitoring of a growing crystal showed 2x4 reconstruction - characteristic for the 2-D growth in an arsenic-rich atmosphere. When the growth of the GaAs layer was finished, the arsenic flux was increased in order to obtain the V/III ratio of 15.0 during 200 s. Then the As flux was stabilized for 30 s. In the same time, the temperature in the growth chamber was at first abruptly lowered to 450°C, and then stabilised. Simultaneously, the GaAs free surface was monitored by RHEED - the reconstruction was 2x4. After 230 s from the end of the buffer growth, the growth of the absorbing In_{0.24}GaAs layer was started. The growth time was 20 s, which resulted in the QW thickness of about 8 nm. When the growth of the In_{0.24}GaAs layer was completed, both the temperature and the arsenic flux were changed so as to obtain stable values: V/III = 5.0 and T = 530°C, which took 230 s. Finally, the 5-nm cap layer of GaAs was deposited (the growth time 20 s), which plays also a role of the barrier for In_{0.24}GaAs potential well. The epitaxial growth was terminated by closing the Ga effusion cell. The temperature was lowered to 350°C in the arsenic atmosphere, then the chamber was cooled to the room temperature without the arsenic flux.

On the such a produced SESAM absorber structure the anti-reflective layer of silicon dioxide (SiO₂) in the first embodiment and of silicon nitride (SiNₓ) in the second embodiment was deposited. The layers were deposited using PEVCD method in OPT (UK) Plasmalab System 100 machine. Preparation of the vacuum chamber includes simultaneous pumping (p < 1 mTorr), heating of the susceptor to an assumed temperature, and keeping the conditions for about an hour. In both cases the temperature was 300°C. After filling the chamber with nitrogen it was opened and the samples were placed on a warmed susceptor, which is also the earth electrode. Vacuum pumping of the chamber until the vacuum reaches *p* < 1 mTorr takes about 30 s and allows a fast desorption of the volatile surface pollution. Stabilization of the reactive gases flows and the pressure in the chamber takes another 30 s.

The layer deposition started after the generator was turned on. For the precise control of the thickness of the deposited layer, it was necessary to determine the moment of the glow discharge (the condition of the beginning of the surface synthesis). It happens within a few seconds after the generator was turned on, when the load impedance of the generator adjusts automatically. The process was finished (the generator and the gas sources turned off) when the deposition time implied the demanded thickness of the layer. At fixed process conditions this deposition rate was determined basing on previous calibration processes.

The wafers were took out after the deposition process followed by the purification process of the chamber with nitrogen and after air-filling. Thickness of the layers were controlled using a Gaertner ellipsometer and a spectral ellipsometer VASE. In order to determine the strain of the layers obtained in different conditions, test depositions on 3-inch silicon substrates were performed. Then their curvature were measured using a Tencor profilometer.

In case of SiO₂ layer deposition, the source of silicon was a 2% silane (SiH₄) diluted in nitrogen and the oxygen (O) source was nitrous oxide (N₂O). The flows used to obtain proportion close to the stochiometric silicon dioxide were: 1125 cm³/min for 2% SiH₄/N₂ and 750 cm³/min for N₂O. The generator power was 16 W with the frequency 13,56 MHz, the pressure inside the chamber was p=1 Torr. The layers produced were slightly compressively strained (strain of order of 50 MPa) and the refractive index was 1.46 (at the wavelenght of 800 nm).

In case of deposition of the low-stressed layers of SiNₓ, as the reaction gases - 2% SiH₄/N₂ was also used as the silicon source, and ammonia (NH₃) as the nitrogen source. The flows were, respectively: 1000 cm³/min and 20 cm³/min. The pressure inside the chamber was 1 Torr, the generator power 15 W in RF mode (13.56 MHz) and 20 W in LF mode (100 Hz).

The strain in those layers was in the range of a detection level of the earlier determined measuring method and was +/-50MPa (small compressive and tensile strains). To obtain the antireflective layers of the silicon nitride with the refraction index of n=1.9 was used.

As it is shown in the Fig.4, the GDD profile for the heterostructure absorber with the antireflective layer, i.e. for the antiresonant structure, is independent on the wavelenght in the broad spectral range. This means, that the layer relaxation time will depend on the carrier lifetime in the absorbing layer which, in turn, depends on the surface density of the electrically active defects. It was measured by the pump-probe technique in which two short light pulses are used: weak probing pulse and high intensity pumping. It was established how the pumping pulse changes the optical features of the medium (in this case of the saturable absorber) by probing it using the probe pulse. In this technique, the intensity of the probing pulse has to be significantly lower than the pumping one otherwise the probing pulse would further change the optical parameters of the medium (in this case it should be much lower than level of the absorber saturation). It is also important that for both the pumping and the probing pulses that the duration time was shorter than the duration time of the investigated phenomena (in case of absorption blenching in saturable absorbers which is of the order of ps the pulse duration should be around t=30fs). By changing the delay of the second pulse in respect to the first one the dynamics of the process (absorption blenching) can be investigated.

The train of the femtosecond pulses is divided by a splitting plate in proportion 4% and 96% for reflected - probe beam and transmitted - pump beam, respectively. The reflected beam is further splited and one beam is focused on a photodiode in order to monitor the probe beam intensity. The probe beam is focused on the saturable absorber using a lens. The reflected beam is guided along the probe beam and partially reflected by the splitting plate, and the recorded by another photodetector.

The idea of this measurement technique is based on a simultaneous measurement of the signal from both photodiodes in dependence on the power of pumping diode, while the ratio of those signals is proportional to the refraction index of the measured absorber. When the pump beam is switched off, the registered refractive index corresponds to the non-saturable refraction. This is the case when the pumping level is significantly lower comparing to the absorber fluence. When the pumping beam is switched on, i.e. when both beams reach simultaneously the absorber (i.e. both optical paths are equal), the high intensity pulse partially blenches the absorber, what manifests as the increase of the reflectivity of the probe beam. Time resolved characteristic of the decay of the absorption blenching can be established from the change of the refractive index for the probe beam as the function of the delay of the probe impulse in respect to the pump pulse. The delay is realized by the change of the optical elements in the delay line. In such a way the time dependant absorption/transmission decay is registered. The dependences of the transmission change of the SESAM structures covered with the different antreflective layers: amorphous oxides, Si0₂ and SiNₓ, (Fig.5) show how fast increases the reflective index and also show two decay constants, first the fast one then the slow one. The exact values of those data are shown in the table in the Fig. 5. The fast decay time, which determines the impulse duration time, is related to the carrier thermalization in the conduction band whereas the slow decay time describing the interband recombination determines the self mode-locking.

As it was expected, the relaxation time of the SESAM absorber or in other words, the recovery time of the modulator is the longest for the absorber with the amorphous oxides on its surface although the highest surface defect density. This may suggest that the group delay dispersion GDD determines stronger both the pulse duration and relaxation time than the density of non-radiative recombination centers. Moreover, large differences between the time decay characteristics for the SESAM covered with different dielectric layers were observed. The relaxation time for the absorber with the SiNₓ layer is 11.0 ps, whereas for SESAM covered with the SiO₂ layer only 2.6ps. More than four times shorter relaxation time is due to the different density of the surface states on the GaAs/dielectric interface. During the SiNₓ layer deposition, the reactive hydrogen ions, present in the plasma, remove the As and As₂O₃ from the the GaAs surface. This results in the reduction of As antysides, which mainly are responsible for the creation of the surface states. Moreover, the hydrogen atoms can saturate the dangling bonds and can passivate the defects. In case of the SiO₂ deposition in the presents of the nitrogen and oxygen atoms, the surface states can be created by the dangling bonds of the arsenic and gallium defects bounded to As, Ga, N, Si, and O. This explains the difference between the surface states densities of those two cases and justifies the more than fourfold reduction of the recovery time of SESAM with the SiO₂ antireflective layer in respect to the one with the SiNₓ layer.

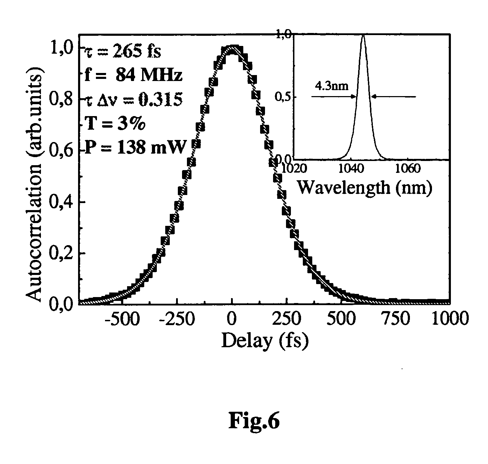

SESAM heterostructure with the SiO₂ antireflective layer was investigated using the autocorrelation technique in z-type resonator with 3% output coupler mirror and ytterbium-doped potassium yttrium tungstate Yb:KY(WO₄)₂ gain medium. In the Fig. 6 there is shown the autocorrelation data together with the optical spectrum of the active medium (Yb:KYW) in which the mode-locking was achieved. The set-up generates pulses of 265 fs at the 1044nm wavelength. The time-bandwith product of 0.315 is equal to the theoretical value resulting from Fourier transform. The average power was 138mW at the 84.0 MHz repetition frequency. Energy transmitted by a single pulse was 1.643 nJ what corresponds to the 16.43 kW.

As it was shown, the SESAM heterostructure with the SiO₂ antireflective layer is characterized by the shorter recovery time but probably also by the shorter lifetime at the same work conditions as the heterostructure with SiNₓ. It is because of the easier penetration of the oxide by the OH⁻ ions, which are present in the water vapor. The solution is the double-layered antireflective cover that is covering the SiO₂ layer with the thin layer of silicon nitride SiNₓ.

## Claims

1. A method for reduction of a recovery time of passive SESAM absorbers, produced from a semiconductor structure based on GaAs and related materials, for which an active region is located within a range of an interaction of surface states, **characterised in that** on a free surface of said absorber structure with an optical resonant cavity of a thickness of an even multiple of a wave optical path, a dielectric antireflective layer of at least one dielectric being deposited, said layer is such that a surface states density at an interface between the GaAs semiconductor and the dielectric layer is in the range of 1x10¹²-1x10¹³ cm⁻²eV⁻¹, and a thickness of said deposited layer is equal to a quarter of an optical wave length (λ/4) in said layer and the deposition being performed at a temperature lower than 350°C.

2. A method as in claim 1, **characterized in that** on the surface of the absorber a silicon dioxide (SiO₂) layer being deposited, and the deposition being performed by a plasma enhanced chemical vapor deposition method (PECVD) at a pressure in a chamber equal to 1 Torr, and at reactive gas flow 1125 cm³/min and 750 cm³/min, respectively, for silan (SiH₄) of a concentration equal to 2% in nitrogen (N₂) and for dinitrogen monoxide (N₂O) and a generator power of 16W working at a frequency of 13.56 MHz.

3. A method as in claim 1, **characterized in that** on the absorber surface a silicon nitride (SiNₓ) layer being deposited, and the deposition being performed by a plasma enhanced chemical vapor deposition method (PECVD) at a pressure in a chamber equal to 1 Torr and at reactive gas flow equal to 1000 cm3/min and 20 cm3/min, respectively, for silane (SiH4) of a concentration of 2% in nitrogen (N₂) and for ammonia (NH₃), a pulse operation of generator and at a generator power of 15W working at a frequency of 13,56MHz and 20W at 100kHz.

4. A method as in claim 1, **characterized in that** on the surface of the absorber at first a silicon dioxide (SiO₂) layer being deposited, and then a silicon nitride (SiNₓ) layer, and a total thickness of the layers is equal to λ/4 in these dielectric materials.

5. A method as in claim 1 and 3, **characterized in that** the silicon nitride (SiNₓ) layer being deposited by means of an alternating deposition of thin silicon nitride (SiNₓ) layers of compressive and tensile strains.

## Patentansprüche

1. Das Verfahren zur Verringerung der Wiederherstellungszeit von passiven SESAM-Absorbern, die aus GaAs-Halbleiterstrukturen und derivativen Materialien ausgeführt werden und bei welchen ein aktiver Bereich in der Wirkungsreichweite der Oberflächenzustände platziert wurde, **dadurch gekennzeichnet, dass** auf die Oberfläche der freien mit einer optischen Resonanznische von der Dicke einer geraden Vielfachen des optischen Wellenweges ausgestatteten Absorberstruktur eine dielektrische Antireflexionsschicht von mindestens einem Dielektrikum aufgetragen wird, so dass die Dichte der Oberflächenzustände im Bereich der Phasenverteilung zwischen den Halbleitern GaAs und der dielektrischen Schicht im Bereich von 1x10¹²-1x10¹³ cm⁻² eV⁻¹ enthalten wird, wobei die Dicke der aufgetragenen Schicht einem Viertel der optischen Wellenlänge (λ/4) in dieser Schicht gleicht und das Auftragen mit einer Temperatur unter 350°C durchgeführt wird.

2. Das Verfahren nach Anspruch 1, **dadurch gekennzeichnet, dass** auf die Oberfläche des Absorbers eine Schicht von Siliciumdioxid (SiO₂) aufgetragen wird, wobei das Auftragen mit dem Verfahren der plasmaunterstützten chemischen Gasphasenabscheidung (PECVD-Plasma Enhanced Chemical Vapor Deposition), bei dem Druck in der Kammer gleich 1 Torr, bei der Strömung von Reaktionsgasen 1125 cm³/min und 750 cm³/min, entsprechend, für Silan (SiH₄) von der Konzentration gleich 2% in Stickstoff (N₂) und für Dickstoffmonoxid (N₂O) und bei einer Leistung von 16 W des mit der Frequenz 13,56 MHz arbeitenden Generators durchgeführt wird.

3. Das Verfahren nach Anspruch 1, **dadurch gekennzeichnet, dass** auf die Oberfläche des Absorbers eine Schicht von Siliciumnitrid (SiNₓ) aufgetragen wird, wobei das Auftragen mit dem Verfahren der plasmaunterstützten chemischen Gasphasenabscheidung (PECVD-Plasma Enhanced Chemical Vapor Deposition), bei dem Druck in der Kammer gleich 1 Torr, bei der Reaktionsgas-Strömung von 1000 cm³/min und 20 cm³/min, entsprechend, für Silan (SiH₄) von der Konzentration gleich 2% in Stickstoff (N₂) und für Ammoniak (NH₃), bei Impulsarbeit des Generators und einer Leistung des Generators von 15W bei der Frequenz 13,56 MHz und 20W bei der Frequenz 100kHz durchgeführt werden.

4. Das Verfahren nach Anspruch 1, **dadurch gekennzeichnet, dass** auf die Absorberoberfläche erst eine Siliciumdioxidschicht (SiO₂), und anschließend eine Siliciumnitridschicht (SiNₓ) aufgetragen werden, wobei die summarische Schichtdicke in diesen Dialektriken gleich λ/4 ist.

5. Das Verfahren nach Ansprüchen 1 und 3, **dadurch gekennzeichnet, dass** die Siliciumnitridschicht (SiNₓ) durch abwechselndes Auftragen von dünnen Siliciumnitridschichten (SiNₓ) von Press- und Dehnspannungen aufgetragen wird.

## Revendications

1. Le procédé de réduction du temps de récupération d'absorbeurs passifs SESAM, obtenus de la structure semi-conductrice du GaAs et dérivés, où la partie active est placée dans le rayon d'interaction des états de surface, **caractérisé en ce que** sur la surface libre d'une structure d'absorbeur avec une cavité optique résonante d'une épaisseur d'un multiple pair de chemins optiques d'une onde, on dépose une couche antiréfléchissante diélectrique consistante d'au moins d'un matériau diélectrique, telle que la densité des états de surface sur une interface entre le semiconducteur GaAs et la couche diélectrique soit dans la gamme de 1x10¹²-1x10¹³ cm⁻²eV⁻¹, où l'épaisseur de la couche déposée est égale à un quart d'une longueur d'onde optique (λ/4) dans ladite couche et le dépôt est réalisé à une température inférieure à 350°C.

2. Le procédé selon la revendication 1, **caractérisé en ce qu'**on dépose sur la surface d'absorbeur une couche de dioxyde de silicium (SiO₂), et le dépôt est effectué par le dépôt chimique en phase vapeur assisté par plasma (PECVD- Plasma Enhanced Chemical Vapor Deposition), où la pression dans la chambre pendant ce procédé égale à 1 Torr et le flux de les gaz de réaction égale à 1125 cm³/min et 750 cm³/min, respectivement, pour le silane (SiH₄) dont la concentration dans l'azote (N₂) égale à 2% et pour le protoxyde d'azote (N₂O) et la puissance du générateur qui fonctionne à fréquence de 13,56 MHz égale à 16 W.

3. Le procédé selon la revendication 1, **caractérisé en ce qu'**on dépose sur la surface d'absorbeur une couche de nitrure de silicium (SiNₓ), et le dépôt est effectué par le dépôt chimique en phase vapeur assisté par plasma (PECVD- Plasma Enhanced Chemical Vapor Deposition), où la pression dans la chambre pendant ce procédé égale à 1 Torr et le flux de gaz de réaction égale à 1000 cm³/min et 20 cm³/min, respectivement, pour le silane (SiH₄) dont la concentration dans le azote (N₂) égale à 2% et pour l'ammoniac (NH₃), où le générateur fonctionne en mode pulsé et la puissance du générateur égale à 15 W à fréquence de 13,56 MHz et à 20 W à fréquence de 100 kHz.

4. Le procédé selon la revendication 1, **caractérisé en ce qu'**on dépose sur la surface d'absorbeur d'abord la couche de dioxyde de silicium (SiO₂), et ensuite la couche de nitrure de silicium (SiNₓ), où l'épaisseur totale des couches est égale à λ/4 dans ces matériaux diélectriques.

5. Le procédé selon la revendication 1 et 3, **caractérisé en ce qu'**on dépose la couche de nitrure de silicium (SiNₓ) par le dépôt alterné des couches fines de nitrure de silicium (SiNₓ) avec les contraintes de compression et de tension.
